# EUROPEAN PATENT SPECIFICATION

(11) **EP 4 400 797 B1**
(45) Date of publication and mention of the grant of the patent: **11.03.2026**
(21) Application number: 24151114.6
(22) Date of filing: 10.01.2024
(51) Int. Cl.: F28D 21/00, F28F 3/04, E03C 1/00

(54) **WASTEWATER HEAT RECOVERY SYSTEMS**
ABWASSERWÄRMERÜCKGEWINNUNGSSYSTEME
SYSTÈMES DE RÉCUPÉRATION DE CHALEUR D'EAUX USÉES

(30) Priority: 10.01.2023 US 202363479210 P
(43) Date of publication of application: 17.07.2024
(73) Proprietor: Kohler Mira Limited, Cheltenham, Gloucestershire GL52 5EP (GB)
(72) Inventor: CONWAY, Sean, Cheltenham, GL52 5EP (GB); JONES, Oliver, Cheltenham, GL52 5EP (GB); SANDELL, Steven, Cheltenham, GL52 5EP (GB); CRANWELL, James, Cheltenham, GL52 5EP (GB); EDWARDS, Bradley, Cheltenham, GL52 5EP (GB)
(74) Representative: Barker Brettell LLP

(56) References cited:
- DE-A1- 19 608 404
- DE-A1- 3 919 543
- GB-A- 2 456 570
- US-A1- 2014 237 714

## Description

### Background

This application relates generally to a heat exchange tray. More specifically, this application relates to a heat exchange tray configured to recover heat from shower wastewater to increase the temperature of water traveling to the shower.

DE 39 19 543 A1 discloses a heat exchanger that may be fed from water draining from a shower, the heat exchanger comprises a base including a bottom portion with sidewalls forming a serpentine path for wastewater, a cover above the sidewalls and a fresh water heat exchange coil arranged in the serpentine path.

GB 2 456 570 A discloses a shower tray incorporating a heat exchanger that is constructed of an upper section with a water capturing recess that is connected to a lower section at the perimeter to form a chamber.

US 2014/237714 A1 discloses a shower tray having a heat exchanger that is arranged beneath the shower tray for recovering heat from waste water in order to heat up clean water.

DE 196 08 404 A1 discloses a counterflow or crossflow heat exchanger close to the shower in the shower outflow that is used to recover the residual heat of the water and to reheat the cold water for the mixer tap.

### Brief Description of Drawings

Fig. 1 is a perspective view of an example heat exchange tray.
Fig. 2 is a perspective view of an example cover.
Fig. 3 is a cross-sectional view of an example heat exchange tray.
Fig. 4 is a cross-sectional view of an example heat exchange coil placed within an example heat exchange tray.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the scope of the present disclosure as defined by the appended claims.

### Detailed Description

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

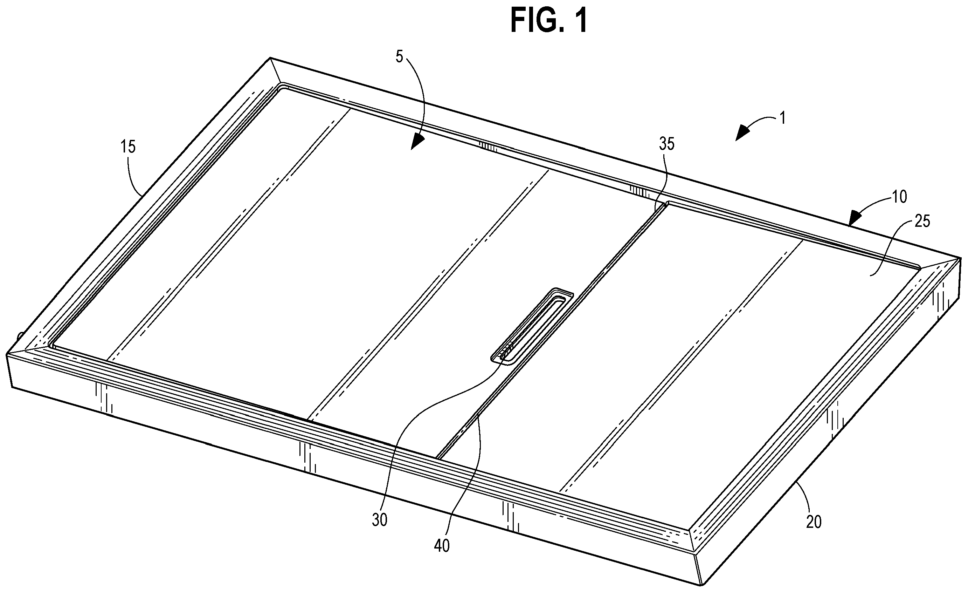

Turning first to Fig. 1, a heat exchange tray 1 may be provided for a user to stand on when showering. The heat exchange tray 1 may include a cover 5 which may sit atop or be inset within a base 10 of the heat exchange tray 1. The base 10 may include a cutout configured to receive the cover 5. The cover 5 may attach to or be integrally formed with the base 10. When water flows on the heat exchange tray 1 during a shower, water may flow via gravity from each of a first end 15 and a second end 20 of the heat exchange tray 1. Water may flow via gravity down the cover 5 and a sloped portion 25 of the base 10. Water may flow toward a heat chamber inlet 30 to enter a heat exchange chamber (not illustrated, as the heat exchange chamber is covered by the cover 5). In alternative embodiments, heat chamber inlet 30 may be positioned near or at the first end 15 or second end 20. In such an embodiment, the cover 5 may extend most or all of the length of the base 5 such that sloped portion 25 is smaller or not present.

The heat chamber inlet 30 may be placed near an end 35 of the cover 5. The end 35 of the cover 5 may be on an opposite side of the cover 5 relative to the first end 15 of the heat exchange tray 1. The heat chamber inlet 30 may be positioned near a connection point 40 of the cover 5 and the sloped portion 25 of the base 10. The heat chamber inlet 30 may be positioned in any suitable manner, such that gravity causes water to flow toward and into the heat chamber inlet 30.

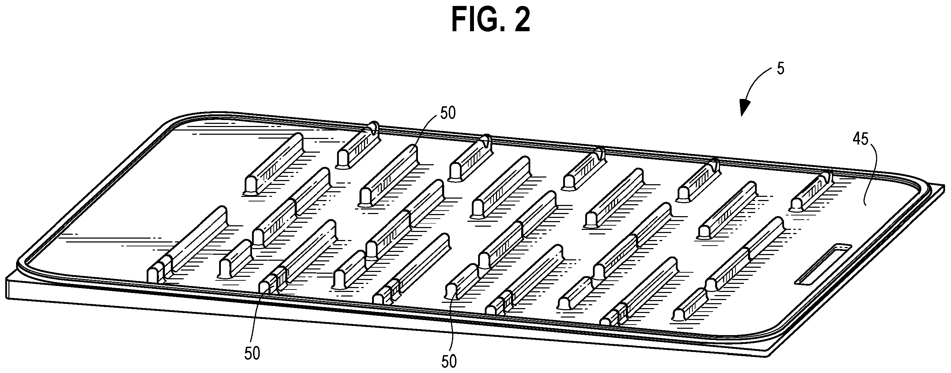

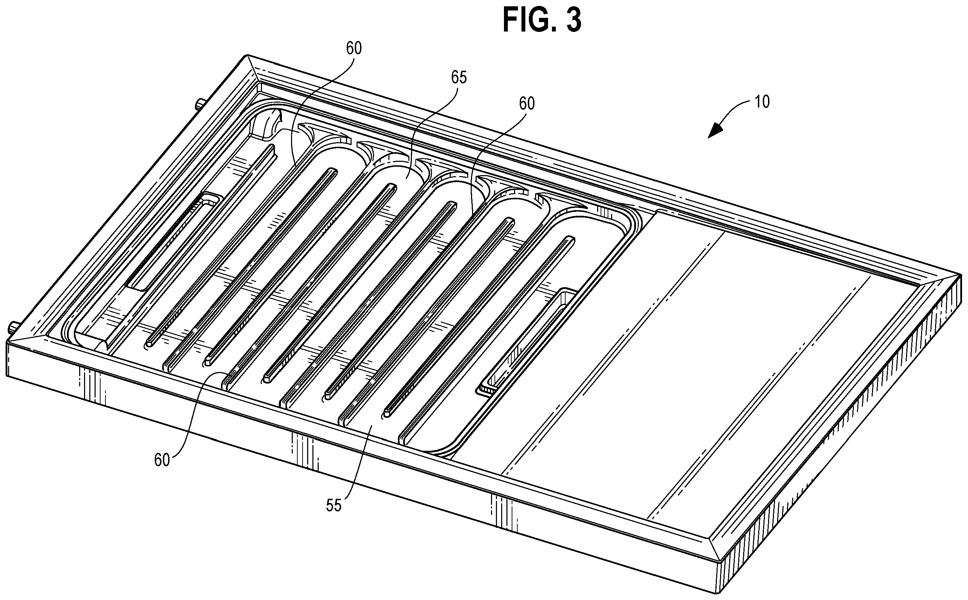

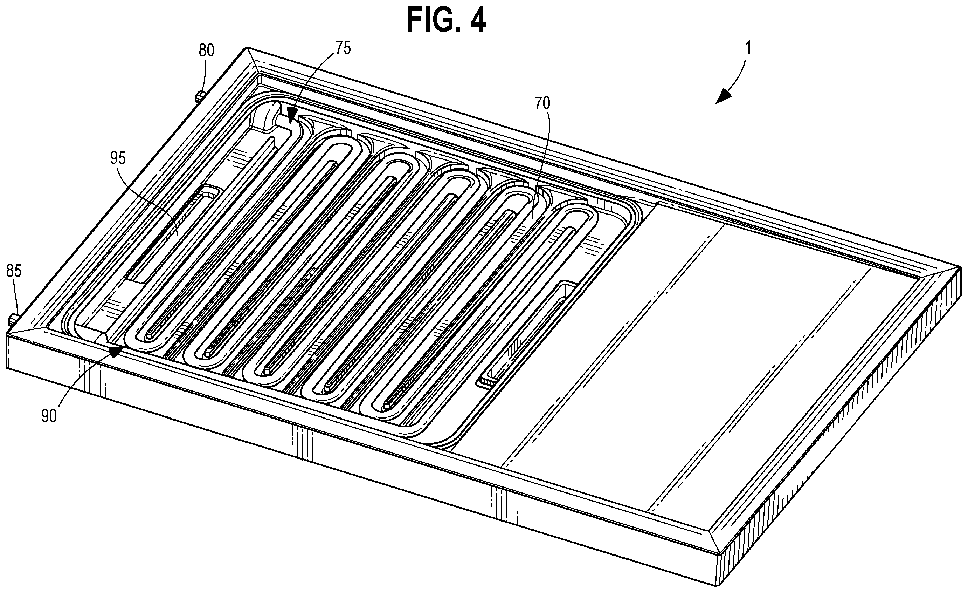

As illustrated in Fig. 2, an underside 45 of the cover 5 may include a plurality of protruding portions 50, which may be flow-directing features. The protruding portions 50 may be positioned in such a way that the base 10 may be integrated with the cover 5. As illustrated in Fig. 3, a bottom portion 55 of the base 10 may include one or more sidewalls 60 which may form a path 65. The protruding portions 50 of Fig. 2 may engage with the sidewalls 60 of the path 65 of Fig. 3 in order to form a wastewater flow path 70, as illustrated in Fig. 4. Such engagement may take the form of an abutting relationship, or the protruding portions 50 may fit with or around the sidewalls 60 to form such engagement.

Turning now to Fig. 4, a heat exchange coil 75 may carry water to be heated. Water may enter the heat exchange coil 75 via an inlet 80 and may flow out of the heat exchange coil 75 via an outlet 85. The inlet 80 and outlet 85 may be switched such that the water enters and exits the tray 1 from opposite sides of the tray 1.

The heat exchange coil 75 may be positioned along the wastewater flow path 70. The heat exchange coil 75 may "snake" along the wastewater flow path 70 and may be fitted along the wastewater flow path 70. The heat exchange coil 75 may be any suitable length to fit the wastewater flow path 70. The heat exchange coil 75 may connect to, be attached to, or be integrally formed with the wastewater flow path 70 in any suitable manner. The heat exchange coil 75 may be made of copper or any other suitable material with beneficial heat transfer qualities. Using copper or another material with desirable heat transfer properties for the heat exchange coil 75 may improve the effectiveness of heat transfer.

When the cover 5 is attached to or placed within the base 10, water may enter a heat exchange chamber 90 via the heat chamber inlet 30. The heat exchange chamber 90 may be formed by the heat exchange coil 75 fitted along the wastewater flow path 70. Fresh water may flow into and through the heat exchange coil 75. When flowing through the heat exchange coil 75 in the heat exchange chamber 90, fresh water in the heat exchange coil 75 may be heated by the wastewater flowing along the wastewater flow path 70. The heat exchange coil 75 may therefore be positioned between a freshwater inlet and an ablutionary fitting. After passing through the heat exchange chamber 90, water may exit the heat exchange tray 1 via a wastewater outlet 95. A waste trap fitment or filter may be placed at the wastewater outlet 95 in order to collect or remove waste from the wastewater.

There may be a void beneath the heat exchange chamber 90, which may act as still air gap insulation or may be filled with an insulating material including but not limited to a foamed polymer or other insulation. The insulating material may serve as a mechanism to enhance heat exchange between the wastewater and the water flowing through the heat exchange coil 75. The insulation may assist with heat transfer by reducing losses of heat to the atmosphere or building structure, and/or act as a safety feature to prevent leaks. The insulation may be expansive foam or a molded insert.

As is evident from the foregoing description, certain aspects of the present invention are not limited by the particular details of the examples illustrated herein, and it is therefore contemplated that other modifications, applications, variations, or equivalents thereof, will occur to those skilled in the art. Many such changes, modifications, variations, and other uses and applications of the present constructions will, however, become apparent to those skilled in the art after considering the specification and the accompanying drawings. In addition, unless mention was made above to the contrary, it should be noted that all of the accompanying drawings are not to scale. All such changes, modifications, variations, and other uses and applications which do not depart from the scope of the present inventions are deemed to be covered by the inventions which are limited only by the claims which follow.

## Claims

1. A heat exchange tray (1) comprising:
a base (10) comprising a cutout, the base including a bottom portion (55) with one or more sidewalls (60) forming a serpentine path for wastewater;
a cover (5) positioned within the cutout of the base (10) to create a space between the base (10) and the cover (5), the cover (5) including one or more protruding portions (50) that engage with the one or more sidewalls (60) of the bottom portion (55) of the base (10) to enclose the serpentine path; and
a heat exchange coil (75) positioned in and along at least a portion of the serpentine path between the base (10) and the cover (5);
wherein fresh water flows through the heat exchange coil (75); and
wherein wastewater flows through the serpentine path between the base (10) and the cover (5), such that the wastewater heats the fresh water flowing through the heat exchange coil (75).

2. The heat exchange tray (1) of claim 1, wherein the one or more protruding portions (50) are flow-directing features.

3. The heat exchange tray (1) of claim 2, wherein the serpentine path and the one or more protruding portions (50) create a wastewater flow path (70).

4. The heat exchange tray (1) of any one of the preceding claims, wherein wastewater may enter the space created between the base and the cover via a heat chamber inlet (30) and the cover (5) is arranged such that gravity causes water on the cover (5) to flow toward and into the heat chamber inlet (30).

5. The heat exchange tray (1) according to claim 4, wherein the base (10) further comprises a sloped portion (25), the sloped portion (25) being configured to cause water to flow via gravity down the sloped portion (25) and towards and into the heat chamber inlet (30).

6. The heat exchange tray (1) according to claim 4 or claim 5, wherein the heat chamber inlet (30) is disposed on the cover (5).

7. The heat exchange tray (1) of any one of the preceding claims, wherein wastewater exits the heat exchange tray (1) via a wastewater outlet (95); and/or water enters the heat exchange coil (75) via an inlet, and wherein water heated via the wastewater exits the heat exchange coil (75) via an outlet.

8. The heat exchange tray (1) according to any one of the preceding claims further comprising:
a heat exchange chamber (90) that is formed in the space between the cover (5) and the base (10); and
a void beneath the heat exchange chamber (90).

9. The heat exchange tray (1) according to claim 8, wherein the void is filled with an insulating material.

10. A method for manufacturing a heat exchange tray (1) comprising:
providing a base (10) that includes a cutout and a bottom portion (55) with one or more sidewalls (60) forming a serpentine path for wastewater;
placing a cover (5) within the cutout of the base to create a space between the base (10) and cover (5), the cover (5) including one or more protruding portions (50) that engage with the one or more sidewalls (60) of the bottom portion (55) of the base (10) to enclose the serpentine path;
positioning a heat exchange coil (75) in the space created between the base (10) and the cover (5) in and along at least a portion of the serpentine path; and
connecting the heat exchange coil (75) between a freshwater inlet and an ablutionary fitting;
wherein wastewater flows through the space created between the base (10) and the cover (5), and the wastewater heats the water flowing through the heat exchange coil (75).

11. The method of claim 9, wherein the one or more protruding portions (50) are flow-directing features.

12. The heat exchange tray (1) of any one of claims 1 to 9 or the method of any one of claims 10 or 11 , wherein the heat exchange coil (75) is made of copper.

## Patentansprüche

1. Wärmetauscherschale (1), umfassend:
eine Basis (10), die einen Ausschnitt umfasst, wobei die Basis einen Bodenabschnitt (55) mit einer oder mehreren Seitenwänden (60) beinhaltet, der einen Serpentinenweg für Abwasser bildet;
eine Abdeckung (5), die innerhalb des Ausschnitts der Basis (10) positioniert ist, um einen Raum zwischen der Basis (10) und der Abdeckung (5) zu schaffen, wobei die Abdeckung (5) einen oder mehrere hervorstehende Abschnitte (50) beinhaltet, die mit der einen oder den mehreren Seitenwänden (60) des Bodenabschnitts (55) der Basis (10) in Eingriff stehen, um den Serpentinenweg einzuschließen; und
eine Wärmetauscherschlange (75), die in und entlang mindestens eines Abschnitts des Serpentinenwegs zwischen der Basis (10) und der Abdeckung (5) positioniert ist;
wobei Frischwasser durch die Wärmetauscherschlange (75) fließt; und
wobei Abwasser durch den Serpentinenweg zwischen der Basis (10) und der Abdeckung (5) fließt, sodass das Abwasser das durch die Wärmetauscherschlange (75) fließende Frischwasser erwärmt.

2. Wärmetauscherschale (1) nach Anspruch 1, wobei der eine oder die mehreren hervorstehenden Abschnitte (50) Flussrichtungsmerkmale sind.

3. Wärmetauscherschale (1) nach Anspruch 2, wobei der Serpentinenweg und der eine oder die mehreren hervorstehenden Abschnitte (50) einen Abwasserflussweg (70) schaffen.

4. Wärmetauscherschale (1) nach einem der vorstehenden Ansprüche, wobei Abwasser über einen Wärmekammereinlass (30) in den zwischen der Basis und der Abdeckung geschaffenen Raum eintreten kann und die Abdeckung (5) angeordnet ist, sodass Schwerkraft Wasser auf der Abdeckung (5) veranlasst, in Richtung des und in den Wärmekammereinlass (30) zu fließen.

5. Wärmetauscherschale (1) nach Anspruch 4, wobei die Basis (10) weiter einen geneigten Abschnitt (25) umfasst, wobei der geneigte Abschnitt (25) konfiguriert ist, um Wasser zu veranlassen, durch Schwerkraft den geneigten Abschnitt (25) hinunter und in Richtung des und in den Wärmekammereinlass (30) zu fließen.

6. Wärmetauscherschale (1) nach Anspruch 4 oder Anspruch 5, wobei sich der Wärmekammereinlass (30) auf der Abdeckung (5) befindet.

7. Wärmetauscherschale (1) nach einem der vorstehenden Ansprüche, wobei das Abwasser über einen Abwasserauslass (95) aus der Wärmetauscherschale (1) austritt; und/oder Wasser über einen Einlass in die Wärmetauscherschlange (75) eintritt, und wobei durch das Abwasser erwärmtes Wasser über einen Auslass aus der Wärmetauscherschlange (75) austritt.

8. Wärmetauscherschale (1) nach einem der vorstehenden Ansprüche, weiter umfassend:
eine Wärmetauschkammer (90), die im Raum zwischen der Abdeckung (5) und der Basis (10) gebildet ist; und
eine Lücke unterhalb der Wärmetauscherkammer (90).

9. Wärmetauscherschale (1) nach Anspruch 8, wobei die Lücke mit einem Isoliermaterial gefüllt ist.

10. Verfahren zur Herstellung einer Wärmetauscherschale (1), umfassend:
Bereitstellen einer Basis (10), die einen Ausschnitt und einen Bodenabschnitt (55) mit einer oder mehreren Seitenwänden (60) beinhaltet, der einen Serpentinenweg für Abwasser bildet;
Platzieren einer Abdeckung (5) innerhalb des Ausschnitts der Basis, um einen Raum zwischen der Basis (10) und Abdeckung (5) zu schaffen, wobei die Abdeckung (5) einen oder mehrere hervorstehende Abschnitte (50) beinhaltet, die mit der einen oder den mehreren Seitenwänden (60) des Bodenabschnitts (55) der Basis (10) in Eingriff stehen, um den Serpentinenweg einzuschließen;
Positionieren einer Wärmetauscherschlange (75) im zwischen der Basis (10) und der Abdeckung (5) geschaffenen Raum in und entlang mindestens eines Abschnitts des Serpentinenwegs; und
Verbinden der Wärmetauscherschlange (75) zwischen einem Frischwassereinlass und einer Sanitärarmatur;
wobei Abwasser durch den zwischen der Basis (10) und der Abdeckung (5) geschaffenen Raum fließt, und das Abwasser das durch die Wärmetauscherschlange (75) fließende Wasser erwärmt.

11. Verfahren nach Anspruch 9, wobei der eine oder die mehreren hervorstehenden Abschnitte (50) Flussrichtungsmerkmale sind.

12. Wärmetauscherschale (1) nach einem der Ansprüche 1 bis 9 oder Verfahren nach einem der Ansprüche 10 oder 11, wobei die Wärmetauscherschlange (75) aus Kupfer gefertigt ist.

## Revendications

1. Plaque d'échange thermique (1) comprenant :
une base (10) comprenant une découpe, la base incluant une partie inférieure (55) avec une ou plusieurs parois latérales (60) formant un chemin en serpentin pour les eaux usées ;
un couvercle (5) positionné à l'intérieur de la découpe de la base (10) afin de créer un espace entre la base (10) et le couvercle (5), le couvercle (5) incluant une ou plusieurs parties saillantes (50) qui s'engagent avec une ou plusieurs parois latérales (60) de la partie inférieure (55) de la base (10) pour fermer le chemin en serpentin ; et
une bobine d'échange de chaleur (75) positionnée dans et le long d'au moins une partie du chemin en serpentin entre la base (10) et le couvercle (5) ;
dans laquelle de l'eau douce circule à travers la bobine d'échange thermique (75) ; et
dans laquelle les eaux usées circulent à travers le chemin en serpentin entre la base (10) et le couvercle (5), de sorte que les eaux usées chauffent l'eau fraîche circulant à travers la bobine d'échange thermique (75).

2. Plaque d'échange thermique (1) selon la revendication 1, dans laquelle ladite une ou les plusieurs parties saillantes (50) sont des éléments de direction de l'écoulement.

3. Plaque d'échange thermique (1) selon la revendication 2, dans laquelle le chemin en serpentin et ladite une ou les plusieurs ou les parties saillantes (50) créent un chemin d'écoulement des eaux usées (70).

4. Plaque d'échange thermique (1) selon l'une quelconque des revendications précédentes, dans laquelle les eaux usées peuvent entrer dans l'espace créé entre la base et le couvercle via une entrée de chambre de chaleur (30) et le couvercle (5) est agencé de telle sorte que la gravité provoque l'écoulement de l'eau sur le couvercle (5) vers et dans l'entrée de chambre de chaleur (30).

5. Plaque d'échange thermique (1) selon la revendication 4, dans laquelle la base (10) comprend en outre une partie inclinée (25), la partie inclinée (25) étant configurée pour faire couler l'eau par gravité le long de la partie inclinée (25) et vers et dans l'entrée de la chambre de chaleur (30).

6. Plaque d'échange thermique (1) selon la revendication 4 ou la revendication 5, dans laquelle l'entrée de la chambre de chaleur (30) est disposée sur le couvercle (5).

7. Plaque d'échange thermique (1) selon l'une quelconque des revendications précédentes, dans laquelle les eaux usées sortent de la plaque d'échange thermique (1) via une sortie d'eaux usées (95) et/ou l'eau entre dans la bobine d'échange de chaleur (75) via une entrée, et l'eau chauffée par les eaux usées sort de la bobine d'échange de chaleur (75) via une sortie.

8. Plaque d'échange thermique (1) selon l'une quelconque des revendications précédentes, comprenant en outre :
une chambre d'échange thermique (90) formée dans l'espace entre le couvercle (5) et la base (10) ; et
un vide sous la chambre d'échange thermique (90).

9. Plaque d'échange thermique (1) selon la revendication 8, dans laquelle le vide est rempli d'un matériau isolant.

10. Procédé de fabrication d'une plaque d'échange thermique (1) comprenant :
la fourniture d'une base (10) qui inclut une découpe et une partie inférieure (55) avec une ou plusieurs parois latérales (60) formant un chemin en serpentin pour les eaux usées ;
le placement d'un couvercle (5) dans la découpe de la base pour créer un espace entre la base (10) et le couvercle (5), le couvercle (5) incluant une ou plusieurs parties saillantes (50) qui s'engagent avec une ou plusieurs parois latérales (60) de la partie inférieure (55) de la base (10) pour fermer le chemin en serpentin ;
le positionnement d'une bobine d'échange thermique (75) dans l'espace créé entre la base (10) et le couvercle (5) dans et le long d'au moins une partie du chemin en serpentin ; et
la connexion de la bobine d'échange thermique (75) entre une entrée d'eau douce et un raccord d'ablution ;
dans lequel les eaux usées circulent dans l'espace créé entre la base (10) et le couvercle (5), et les eaux usées chauffent l'eau qui circule dans la bobine d'échange thermique (75).

11. Procédé selon la revendication 9, dans lequel ladite une ou les plusieurs parties saillantes (50) sont des éléments de direction d'écoulement.

12. Plaque d'échange thermique (1) selon l'une quelconque des revendications 1 à 9 ou procédé selon l'une quelconque des revendications 10 ou 11, dans lequel la bobine d'échange thermique (75) est en cuivre.
